# EUROPÄISCHE PATENTANMELDUNG

(11) **EP 4 238 909 A1**
(43) Veröffentlichungstag der Anmeldung: **06.09.2023**
(21) Anmeldenummer: 23159498.7
(22) Anmeldetag: 01.03.2023
(51) Int. Cl.: B65G 17/20

(54) **TRANSFERZUGMITTEL SOWIE SYSTEM UND FÖRDERVORRICHTUNG MIT EINEM SOLCHEN TRANSFERZUGMITTEL**

(30) Priorität: 04.03.2022 DE 102022105189
(71) Anmelder: Dematic GmbH, 63150 Heusenstamm (DE)
(72) Erfinder: Peiser, Thomas, 8103 Gratwein-Straßengel (AT); Fink, Lukas, 8132 Pernegg/Mur (AT)
(74) Vertreter: Moser Götze & Partner Patentanwälte mbB

(57) **Zusammenfassung**

Nicht angetriebenes Transferzugmittel einer Fördervorrichtung (100) zur Beförderung von hängenden Gegenständen (10), wobei an dem Transferzugmittel mindestens eine z-förmige Adapterkonsole (1) mit mindestens einem Mitnehmerzinken (1b) befestigt ist, wobei der Mitnehmerzinken (1b) im Wesentlichen parallel versetzt zu einem Grundkörper (1a) der Adapterkonsole (1) angeordnet ist und sich im Wesentlichen parallel zu einer Haupt-Quererstreckungsrichtung des Transferzugmittels erstreckt und aufgrund seiner Positionierung und Form geeignet ist, an einem Kopfteil (5a) eines an der Fördervorrichtung (100) gelagerten und zur Halterung von zu befördernden Gegenständen (10) dienenden Halteadapters (5) anzugreifen, um eine Weiterbeförderung des Halteadapters (5) zu ermöglichen.

## Beschreibung

Die Erfindung betrifft ein Transferzugmittel nach Anspruch 1, ein System mit einem solchen Transferzugmittel nach Anspruch 8 sowie eine Fördervorrichtung zur Beförderung von hängenden Gegenständen mit einem solchen Transferzugmittel nach Anspruch 10.

Eine Fördervorrichtung zur Beförderung von hängenden Gegenständen, wie beispielsweise Kleidungsstücken, Taschen und dergleichen, ist eine Sortier- und Verteilvorrichtung und spielt in der Intralogistik eine wichtige Rolle, wo sie häufig als Schnittstelle zwischen Lagerung und Auslieferung eingesetzt wird. Um den steigenden Anforderungen der Kunden gerecht zu werden, unterliegen die Fördervorrichtungen einer ständigen Weiterentwicklung, insbesondere hinsichtlich Prozesssicherheit und Effizienz.

Gattungsgemäße Fördervorrichtungen weisen Schienenprofile auf, an denen Halteadapter gelagert und geführt sind. Die vorzugsweise mit Rollen ausgestatten Halteadapter sind insbesondere in einem unteren Bereich des Schienenprofils, insbesondere in einer sogenannten Free-Laufschiene, gelagert und geführt. An den Halteadaptern sind, vorzugsweise unterhalb der Free-Laufschiene, die hängenden Gegenstände lösbar befestigt. In den Schienenprofilen ist zudem eine Förderkette der Fördervorrichtung angeordnet, mit der die Halteadapter zu deren Beförderung koppelbar sind. Dazu greifen Mitnehmer der Förderkette insbesondere an einem Kopfteil des Halteadapters an, welches sich vorzugsweise in einen oberhalb der Free-Laufschiene befindlichen Bereich des Schienenprofils erstreckt. Um einzelne Halteadapter aus einem ersten Schienenprofil heraus in ein zweites Schienenprofil zu überführen und somit entsprechenden Abläufen zuzuordnen, sind die Schienenprofile über sogenannte Weichen miteinander verbunden.

Um einen maximalen Durchsatz der Fördervorrichtung zu erreichen, bedarf es einer sehr präzisen Übergabe der Halteadapter an den Weichen. Auch ist sicherzustellen, dass die über die Weiche abtransportierten Halteadapter mit den daran hängenden Gegenständen von dem ersten Schienenprofil wegtransportiert werden, ohne dass diese mit entlang des ersten Schienenprofils weitertransportierten Halteadaptern oder daran hängenden Gegenständen kollidieren. Zudem ist ein Ausfall der Weiche zu vermeiden, da der Ausfall einer einzelnen Weiche die gesamte Fördervorrichtung betreffen kann.

Die Übergabe der Halteadapter und damit der daran befestigten Gegenstände an den Weichen erfolgt von der Förderkette an ein Transferzugmittel. Auch der Weitertransport der Halteadapter in den Weichen wird über das Transferzugmittel bewerkstelligt. Das Transferzugmittel kann dabei über eine separate Antriebsvorrichtung angetrieben sein.

Aus der EP 3 225 571 A1 ist eine Fördervorrichtung bekannt, bei welcher die Weiche einen Übertrieb aufweist. Allerdings ist dabei ein Antriebsband der Weiche zur Herstellung des Übertriebs mittels Rollen und Kupplungselementen mit einer Förderkette der Fördervorrichtung verbunden. Das Antriebsband wird derart von der Förderkette angetrieben, dass die Laufgeschwindigkeit des Antriebsbandes im Betrieb größer ist als die Laufgeschwindigkeit der Förderkette.

Aus der EP 2 886 494 A1 ist bekannt, den Transfer in den Weichen mittels elastisch ausgebildeter und senkrecht zur Förderrichtung hervorstehender Finger zu realisieren. Die Finger greifen dabei unten am Hals der Halteadapter an. Nachteilig dabei ist, dass bei schwergängigen Halteadaptern die Finger überspringen können und damit der vorgegebene Abstand zwischen den Halteadaptern verloren geht.

Demgegenüber besteht die Aufgabe der vorliegenden Erfindung darin, ein Transferzugmittel, ein System und eine Fördervorrichtung mit einem solchen Transferzugmittel bereitzustellen, mit welchen eine reibungslose und effiziente Übergabe von hängenden Gegenständen, beispielsweise an einer Weiche der Fördervorrichtung, sichergestellt wird.

Diese Aufgabe wird durch das Transferzugmittel mit den Merkmalen des Anspruchs 1, das System mit den Merkmalen des Anspruchs 8 sowie die Fördervorrichtung mit den Merkmalen des Anspruchs 10 gelöst. Vorteilhafte Ausgestaltungen ergeben sich aus den Unteransprüchen und der Beschreibung.

Erfindungsgemäß wird ein nicht angetriebenes Transferzugmittel einer Fördervorrichtung zur Beförderung von hängenden Gegenständen bereitgestellt, wobei an dem Transferzugmittel mindestens eine z-förmige Adapterkonsole mit mindestens einem Mitnehmerzinken befestigt ist. Der Mitnehmerzinken ist im Wesentlichen parallel versetzt zu einem Grundkörper der Adapterkonsole angeordnet und erstreckt sich im Wesentlichen parallel zu einer Haupt-Quererstreckungsrichtung des Transferzugmittels und ist aufgrund seiner Positionierung und Form geeignet, an einem Kopfteil eines an der Fördervorrichtung gelagerten und zur Halterung von zu befördernden Gegenständen dienenden Halteadapters anzugreifen, um eine Weiterbeförderung des Halteadapters zu ermöglichen.

Mit anderen Worten wird das Transferzugmittel - statt mit dem aus der EP 2 886 494 A1 bekannten, senkrecht zu einer Förderrichtung der Fördervorrichtung und senkrecht zur Haupt-Quererstreckungsrichtung des Transferzugmittels hervorstehenden Finger - mit einer Adapterkonsole versehen, welche einen Mitnehmerzinken aufweist, der sich ebenfalls senkrecht zur Förderrichtung, jedoch im Wesentlichen parallel zur Haupt-Quererstreckungsrichtung des Transferzugmittels erstreckt. Die Haupt-Quererstreckungsrichtung ist insbesondere von einer weiteren, senkrecht zur Haupt-Quererstreckungsrichtung angeordneten Quererstreckungsrichtung zu unterscheiden. In der Haupt-Quererstreckungsrichtung weist das Transferzugmittel eine größere Quererstreckung auf als in der weiteren Quererstreckungsrichtung.

Die z-Form der Adapterkonsole ergibt sich daraus, dass der Mitnehmerzinken im Wesentlichen parallel versetzt zu dem Grundkörper der Adapterkonsole angeordnet ist.

Die Adapterkonsole inklusive des Mitnehmerzinkens ist - im Gegensatz zu dem aus der EP 2 886 494 A1 bekannten Finger - verwindungssteif ausgebildet, damit auch bei schweren, an den Halteadaptern gelagerten Gegenständen eine Weiterbeförderung sichergestellt wird. Der Grundkörper ist deshalb vorzugsweise flächig ausgebildet.

Die Adapterkonsole ist vorzugsweise mittels einer stoffschlüssigen Verbindung an dem Transferzugmittel befestigt.

Im Gegensatz zur aus der EP 2 886 494 A1 bekannten Lösung, bei welcher der Finger am Hals des Halteadapters angreift, ist es mit dem erfindungsgemäßen Transferzugmittel möglich, den Halteadapter nur an dessen Kopfteil zu führen. Das Kopfteil des Halteadapters ist von dem Halsteil des Halteadapters zu unterscheiden. Das Halsteil ist auf der von dem Transferzugmittel abgewandten Seite des Kopfteils und insbesondere im Bereich von Förderrollen des, vorzugsweise rollbar gelagerten, Halteadapters angeordnet. Der Halteadapter weist neben dem Kopfteil und dem Halsteil insbesondere zwei Förderrollen sowie eine Schnittstelle für die Aufnahme des zu befördernden Gegenstands auf. Es ist jedoch auch denkbar, dass der Halteadapter anders ausgeführt ist, also andere, weniger oder zusätzliche Komponenten aufweist.

Mittels des erfindungsgemäßen Transferzugmittels, insbesondere der Anordnung des mindestens einen Mitnehmerzinkens, kann die Effizienz und Prozesssicherheit bei der Übergabe der Halteadapter und damit der hängenden Gegenstände erhöht und der Wartungsaufwand reduziert werden. Somit kann auch gegenüber der EP 2 886 494 A1 ein höherer Durchsatz der Fördervorrichtung erreicht werden.

In vorteilhafter Weise ist vorgesehen, dass das Transferzugmittel eine Transferkette, ein Transferriemen oder ein Transferseil ist.

Im Falle der Transferkette erstreckt sich der Mitnehmerzinken im Wesentlichen parallel zu einem Kettenbolzen der Transferkette. Mit anderen Worten wird die Transferkette - statt mit dem aus der EP 2 886 494 A1 bekannten, senkrecht zu einer Förderrichtung der Fördervorrichtung und senkrecht zu einem Kettenbolzen der Transferkette hervorstehenden Finger - mit einer Adapterkonsole versehen, welche einen Mitnehmerzinken aufweist, der sich ebenfalls senkrecht zur Förderrichtung, jedoch im Wesentlichen parallel zu einem Kettenbolzen der Transferkette erstreckt.

Das "Grundgerüst" der Transferkette ist insbesondere als Rollenkette ausgebildet, welche gattungsgemäß Außenlaschen, Innenlaschen, Kettenbolzen und Rollen umfasst. Beispielsweise kann eine Rollenkette in der Größe 10B-1 verwendet werden. Auch denkbar ist, dass das "Grundgerüst" der Transferkette als Bolzenkette ausgebildet ist, wobei diese dann die vorgenannten Elemente, jedoch ohne die Rollen umfasst.

Die Adapterkonsole ist insbesondere an der zwei Kettenglieder verbindenden Außenlasche befestigt. Hierdurch wird eine Fertigung der erfindungsgemäßen Transferkette vereinfacht. Auch können die Außenlasche und die Adapterkonsole in einem Teil gefertigt sein.

Besonders vorteilhaft ist vorgesehen, dass die Adapterkonsole einen zweiten Mitnehmerzinken umfasst, welcher ebenfalls im Wesentlichen parallel versetzt zu dem Grundkörper der Adapterkonsole angeordnet ist und sich im Wesentlichen parallel zu der Haupt-Quererstreckungsrichtung des Transferzugmittels erstreckt. Die beiden Mitnehmerzinken der Adapterkonsole sind dann wie die Zinken einer Gabel voneinander beabstandet angeordnet.

Der zweite Mitnehmerzinken ist aufgrund seiner Positionierung und Form ebenfalls geeignet, an einem Kopfteil eines Halteadapters anzugreifen, um eine Weiterbeförderung des Halteadapters zu ermöglichen.

Der zweite Mitnehmerzinken hat den Vorteil, dass ein Abstand zwischen mehreren in der Fördervorrichtung angeordneten Halteadaptern variabler gestaltet werden kann als mit Adapterkonsolen, die nur einen Mitnehmerzinken aufweisen. Auch ist es denkbar, dass die Adapterkonsole mehr als zwei Mitnehmerzinken umfasst, die jeweils aufgrund ihrer Positionierung und Form geeignet sind, an einem Kopfteil des Halteadapters anzugreifen.

Selbstverständlich kann auch mit verschiedenen Adapterkonsolen, bei denen der eine Mitnehmerzinken bei Draufsicht auf die Adapterkonsole einmal an der einen Seite ("links") und einmal an der anderen Seite ("rechts") angeordnet ist, der Abstand zwischen mehreren in der Fördervorrichtung angeordneten Halteadaptern variabler gestaltet werden. Die Ausführung mit zwei Mitnehmerzinken hat dagegen allerdings den Vorteil, dass Gleichteile verwendet werden können, wodurch die Fertigung der Adapterkonsole kostengünstiger ist.

Ebenfalls ist besonders vorteilhaft vorgesehen, dass an dem Transferzugmittel, insbesondere an dem Grundkörper der Adapterkonsole, mindestens ein Eingriffselement befestigt ist, mittels dessen das Transferzugmittel mit einer weiteren Kette, insbesondere einer Förderkette der Fördervorrichtung, koppelbar ist.

Das Eingriffselement kann also zu einem Eingriff in eine weitere Kette vorgesehen sein, um insbesondere ein Übertrieb von einer angetriebenen Kette auf das nicht angetriebene Transferzugmittel herzustellen.

Das Eingriffselement kann als Ritzelzahn oder als Kegel ausgebildet sein. Bei Ausbildung des Eingriffselements als Ritzelzahn entsteht beim Eingriff in die Förderkette eine formschlüssige Kopplung zwischen dem Transferzugmittel und der Förderkette.

Die Größe und ggf. die Form des Ritzelzahns entsprechen vorteilhafter Weise der Größe und Form eines Zahns aus einem zur Umlenkung der weiteren Kette verwendeten Kettenrad. Dies hat den Vorteil, dass der Eingriff des Ritzelzahns in die weitere Kette prozesssicher möglich ist. Die Größe und Form des Ritzelzahns kann beispielsweise der eines Zahns aus einem Kettenrad mit 36 Zähnen entsprechen.

Bei Ausbildung des Eingriffselements als Kegel kann beim Eingriff in die Förderkette eine formschlüssige und kraftschlüssige Kopplung zwischen dem Transferzugmittel und der Förderkette entstehen.

Alternativ zur Adapterkonsole kann das Eingriffselement auch an einem anderen Teil des Transferzugmittels, beispielsweise einem zusätzlichen Positionierungs- und Befestigungselement, befestigt sein. Es ist dann beispielsweise möglich, in einer Längserstreckung des Transferzugmittels abwechselnd eine Adapterkonsole und ein Positionierungs- und Befestigungselement für das Eingriffselement vorzusehen. Auch kann das Eingriffselement direkt an dem Transferzugmittel befestigt sein, wobei dieses dann eine Form oder Struktur aufweist, welche eine für die vorgesehene Verwendung erforderliche Positionierung des Eingriffelements ermöglicht.

Das so ausgeführte Transferzugmittel hat den Vorteil, dass die Komplexität sowie die Teilezahl der Fördervorrichtung, insbesondere einer darin angeordneten Weiche, aufgrund des Wegfalls eines eigenen Antriebs beziehungsweise eines Übertriebs, der für das Transferzugmittel eine andere Geschwindigkeit als für die Förderkette vorsieht, reduziert werden kann.

In vorteilhafter Weise ist das Eingriffselement auf der gleichen Seite der z-förmigen Adapterkonsole angeordnet, zu welcher auch der mindestens eine Mitnehmerzinken versetzt angeordnet ist.

Das Eingriffselement ist also insbesondere "unter" dem Transferzugmittel und auf einer Innenseite der Adapterkonsole, insbesondere auf einer Innenseite des Grundkörpers, angeordnet.

Eine solche Anordnung des Eingriffselements hat den Vorteil, dass ein kleiner Umlenkradius des Transferzugmittels ohne Kollision zwischen zwei nebeneinander angeordneten Adapterkonsolen bzw. Eingriffselementen ermöglicht wird.

In konstruktiv einfacher Weise ist das Eingriffselement als Spritzgussteil ausgebildet. Die Ausführung des Eingriffselements als Spritzgussteil ermöglicht eine vergleichsweise kostengünstige Fertigung.

Zusätzlich oder alternativ kann vorgesehen sein, dass das Eingriffselement an dem Transferzugmittel, insbesondere an dem Grundkörper der Adapterkonsole, mittels einer lösbaren Verbindung befestigt ist.

Es ist denkbar, dass die lösbare Verbindung eine auch als Click- oder Clip-Verbindung bezeichnete Schnappverbindung ist. Alternativ kann das Eingriffselement mittels einer anderen formschlüssigen oder kraftschlüssigen lösbaren Verbindung, beispielsweise einer Schraubverbindung oder einer Nietverbindung, an dem Transferzugmittel befestigt sein.

Die lösbare Befestigung des Eingriffselements hat den Vorteil, dass dieses austauschbar ist. Eine Austauschbarkeit kann beispielsweise dann erforderlich sein, wenn ein hoher Verschleiß des Eingriffselements, insbesondere ein höherer Verschleiß als an anderen Teilen des Transferzugmittels, zu erwarten ist.

Ebenfalls in konstruktiv einfacher Weise ist die Adapterkonsole als Stanz-/Biegeteil ausgebildet. Die Ausführung der auch als Adapterblech bezeichneten Adapterkonsole als Stanz-/Biegeteil hat den Vorteil, dass diese(s) vergleichsweise kostengünstig hergestellt werden kann/können.

Die Erfindung richtet sich ferner auf ein System mit einer angetriebenen Förderkette, die in eine Förderrichtung kontinuierlich bewegbar ist, sowie einem erfindungsgemäßen Transferzugmittel. Die Förderkette und das Transferzugmittel sind dabei derart zueinander, insbesondere übereinander, angeordnet, dass das mindestens eine Eingriffselement des Transferzugmittels in die Förderkette, insbesondere zwischen zwei Kettenbolzen oder Rollen der Förderkette, eingreift, um eine Kraftübertragung von der Förderkette auf das Transferzugmittel herzustellen und dadurch das Transferzugmittel anzutreiben.

Mit anderen Worten wird das Transferzugmittel durch den Eingriff des mindestens einen Eingriffselements in die Förderkette, welche für eine Beförderung bzw. einen Transport der Halteadapter und damit der hängenden Gegenstände entlang einer Förderrichtung in der Fördervorrichtung vorgesehen ist, mit dieser gekoppelt. Durch die Kopplung des Transferzugmittels mit der Förderkette wird ein Übertrieb hergestellt. Die Größe des Eingriffselements ist dabei an die Förderkette, insbesondere den Abstand zwischen den Außen- bzw. Innenlaschen, den Abstand zwischen den Bolzen bzw. Rollen sowie den Radius der Bolzen bzw. Rollen, angepasst.

Vorzugsweise sind gleichzeitig mindestens vier Eingriffselemente des Transferzugmittels mit der Förderkette im Eingriff, um eine gleichmäßige Kraftübertragung sicherzustellen.

Das System ist nicht auf die Förderkette und das Transferzugmittel begrenzt und kann selbstverständlich weitere Elemente umfassen.

Aufgrund des Übertriebs wird kein eigener Antrieb des Transferzugmittels benötigt. Somit entfällt auch ein Toleranzausgleich, der bei der Kopplung zweier angetriebener Zugmittel erforderlich ist.

In einer vorteilhaften Ausgestaltung des Systems ist vorgesehen, dass das Transferzugmittel als Transferkette ausgebildet ist und die Förderkette und die Transferkette Kettenglieder der gleichen Größe aufweisen und das Eingriffselement der Transferkette eine derartige Form aufweist, dass bei der Einleitung des Eingriffs eine möglichst ruckfreie Synchronisation der Geschwindigkeiten beider Ketten erfolgt.

Die Verwendung von Kettengliedern der gleichen Größe hat den Vorteil, dass, wenn die Transferkette in die Förderkette greift, die Bolzen der beiden Ketten, vorzugsweise exakt, übereinander liegen. Hierdurch wird die Genauigkeit bei der Übergabe der Halteadapter und damit der hängenden Gegenstände erhöht.

Zur Sicherstellung der ruckfreien Synchronisation weist das Eingriffselement eine konische Form bzw. konisch geformte Flanken auf, wobei der Eingriff dann reibungslos über eine der konischen Flanken eingeleitet wird. Hierdurch wird die mechanische Beanspruchung des Systems verringert.

Die Erfindung richtet sich ferner auf eine auch als Hängeförderanlage bezeichnete Fördervorrichtung zur Beförderung von hängenden Gegenständen. Die erfindungsgemäße Fördervorrichtung weist Halteadapter zur Halterung von zu befördernden Gegenständen sowie ein erfindungsgemäßes System auf. Das Transferzugmittel ist dabei insbesondere an einer Weiche der Fördervorrichtung, insbesondere in einem Sortierbereich der Fördervorrichtung, angeordnet.

Erfindungsgemäß ist vorgesehen, dass an der Förderkette Mitnehmerfinger, insbesondere in Form von verlängerten Kettenbolzen, angeordnet sind, mittels derer die an der Fördervorrichtung gelagerten Halteadapter förderbar sind, und die Mitnehmerzinken der Adapterkonsole die gleiche Teilung wie die Mitnehmerfinger der Förderkette aufweisen, damit bei einer Übernahme eines Halteadapters von der Förderkette zum Transferzugmittel die Mitnehmerzinken der Adapterkonsole parallel zu den Mitnehmerfingern der Förderkette angeordnet sind.

Mit anderen Worten laufen bei einer Kopplung des Transferzugmittels mit der Förderkette die Mitnehmerzinken der Adapterkonsole auf gleicher Höhe zu den Mitnehmerfingern der Förderkette. Die Mitnehmerfinger der Förderkette sind, genauso wie die Mitnehmerzinken der Adapterkonsole, geeignet, an dem Kopfteil des Halteadapters anzugreifen.

Sobald das Transferzugmittel also mit der Förderkette in Eingriff steht, sind deren Mitnehmerzinken und Mitnehmerfinger so zueinander positioniert, dass der Halteadapter zunächst von beiden Zugmitteln gemeinsam transportiert wird, bevor das Transferzugmittel oder die Förderkette den Halteadapter dann alleine übernimmt und weiterbefördert. Hierdurch wird eine hohe Genauigkeit bei der Übergabe des Halteadapters von der Förderkette an das Transferzugmittel, aber auch von dem Transferzugmittel an die Förderkette, ermöglicht.

Weitere Details der Erfindung ergeben sich aus der nachfolgenden Beschreibung von Ausführungsbeispielen anhand der Zeichnung, in der
- Fig. 1: eine schematische perspektivische und ausschnittsweise Ansicht einer Ausführungsform des erfindungsgemäßen Systems,
- Fig. 2: eine weitere schematische perspektivische Ansicht und ausschnittsweise der Ausführungsform des Systems aus Fig. 1,
- Fig. 3: eine kombinierte schematische und ausschnittsweise Ansicht umfassend eine Schnittansicht von Mitnehmerzinken und Mitnehmerfingern sowie eine Draufsicht auf Halteadapter,
- Fig. 4: eine schematische und ausschnittsweise Schnittansicht einer Förderkette sowie darin eingreifender Ritzelzähne,
- Fig. 5: eine schematische und ausschnittsweise Frontansicht der Ausführungsform des Systems aus Fig. 1 sowie mehrerer Halteadapter,
- Fig. 6: eine schematische und ausschnittsweise Draufsicht einer Ausführungsform der erfindungsgemäßen Fördervorrichtung,
- Fig. 7: eine schematische Schnittansicht einer Weiche der Fördervorrichtung aus Fig. 6 zeigen.

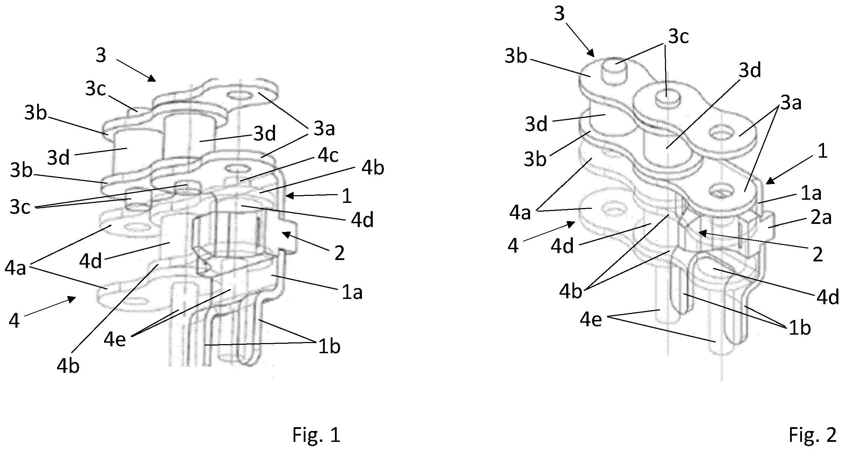

In der Figur 1 ist eine schematische perspektivische und ausschnittsweise Ansicht einer Ausführungsform des erfindungsgemäßen Systems gezeigt. In der Figur 2 ist eine weitere schematische perspektivische und ausschnittsweise Ansicht der Ausführungsform des Systems aus Figur 1 gezeigt.

Das System umfasst eine nicht angetriebene Transferkette 3 sowie eine angetriebene Förderkette 4. Die beiden Ketten 3, 4 sind in dem System übereinander angeordnet. Sowohl die Transferkette 3 als auch die Förderkette 4 sind in der gezeigten Ausführungsform als Rollenkette ausgebildet.

Die Transferkette 3 weist Außenlaschen 3a, Innenlaschen 3b, Kettenbolzen 3c und Rollen 3d auf. Die Transferkette 3 umfasst eine Vielzahl der vorgenannten Komponenten. Der Einfachheit halber ist jedoch jeweils nur ein Paar jeder Komponente dargestellt.

Die Transferkette 3 weist des Weiteren eine Adapterkonsole 1 auf. Die Adapterkonsole 1 hat neben einem Grundkörper 1a bei der vorliegenden Ausführungsform zwei Mitnehmerzinken 1b, welche wie die Zinken einer Gabel voneinander beabstandet angeordnet sind. Alternativ ist es selbstverständlich möglich, dass die Adapterkonsole 1 einen oder mehr als zwei Mitnehmerzinken 1b aufweist. Die Mitnehmerzinken 1b sind parallel versetzt zu dem Grundkörper 1a der Adapterkonsole 1 angeordnet. Die sich daraus ergebende z-Form der Adapterkonsole 1 ist in beiden Figuren gut zu erkennen. Die Mitnehmerzinken 1b erstrecken sich zudem parallel zu den Kettenbolzen 3c der Transferkette 3, was ebenfalls gut in den vorgenannten Figuren zu erkennen ist.

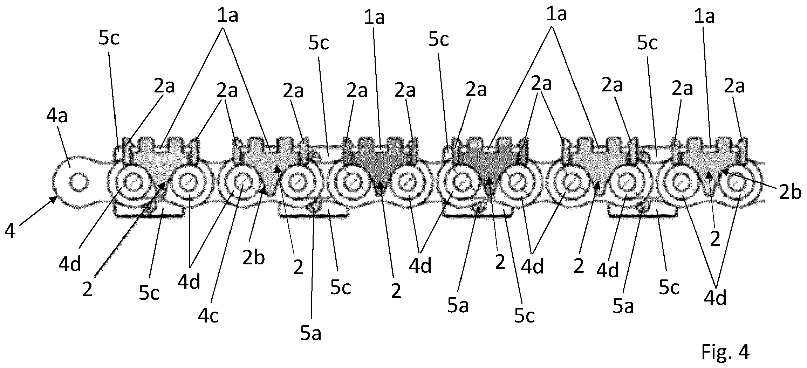

Die Transferkette 3 umfasst zudem einen Ritzelzahn 2. Bei der vorliegenden Ausführungsform ist der Ritzelzahn 2 an der Adapterkonsole 1, genauer gesagt, an dem Grundkörper 1a der Adapterkonsole 1 befestigt. Der Ritzelzahn 2 ist dabei auf der gleichen Seite der z-förmigen Adapterkonsole 1 angeordnet, zu welcher auch die Mitnehmerzinken 1b versetzt angeordnet sind. Der Ritzelzahn 2 ist mittels einer Schnappverbindung (siehe auch Figur 4) lösbar befestigt. Die Größe und Form des Ritzelzahns 2 kann beispielsweise der eines Zahns aus einem Kettenrad mit 36 Zähnen entsprechen.

Alternativ kann der Ritzelzahn 2 auch an einem anderen Teil der Transferkette 3, beispielsweise an einem zusätzlichen Positionierungs- und Befestigungselement, oder mittels einer alternativen formschlüssigen Verbindung oder einer kraftschlüssigen Verbindung, beispielsweise einer Schraubverbindung, an der Transferkette 3 befestigt sein. Auch ist es möglich, dass der Ritzelzahn 2 direkt an der Transferkette 3 befestigt ist, wobei der Ritzelzahn 2 dann eine der vorgesehenen Verwendung entsprechenden Form oder Struktur aufweist.

Die angetriebene Förderkette 4 weist neben Außenlaschen 4a, Innenlaschen 4b, Kettenbolzen 4c und Rollen 4d des Weiteren auch Mitnehmerfinger 4e auf, welche in der gezeigten Ausführungsform eine Verlängerung der Kettenbolzen 4c darstellen. Die Förderkette 4 umfasst eine Vielzahl der vorgenannten Komponenten. Auch hier ist der Einfachheit halber jeweils nur ein Paar jeder Komponente dargestellt.

Gut zu erkennen ist, wie der Ritzelzahn 2 zur Kopplung beider Ketten 3, 4 in die Förderkette 4 und, genauer gesagt, zwischen zwei Rollen 4d der Förderkette 4 eingreift. Hierdurch wird eine Kraftübertragung von der Förderkette 4 auf die Transferkette 3 hergestellt. Die Transferkette 3 ist in der Folge in Form eines Übertriebs antreibbar.

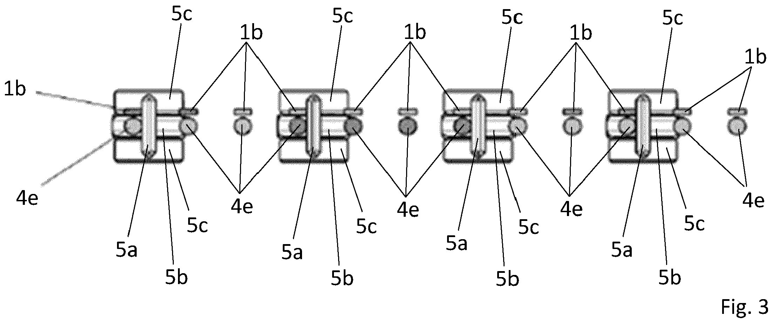

Gut zu erkennen ist ebenfalls, dass die Mitnehmerzinken 1b auf gleicher Höhe wie die Mitnehmerfinger 4e angeordnet sind (siehe auch Figur 3).

In der Figur 3 ist eine kombinierte schematische und ausschnittsweise Ansicht umfassend eine Schnittansicht von Mitnehmerzinken 1b und Mitnehmerfingern 4e sowie eine Draufsicht auf Halteadapter 5 gezeigt.

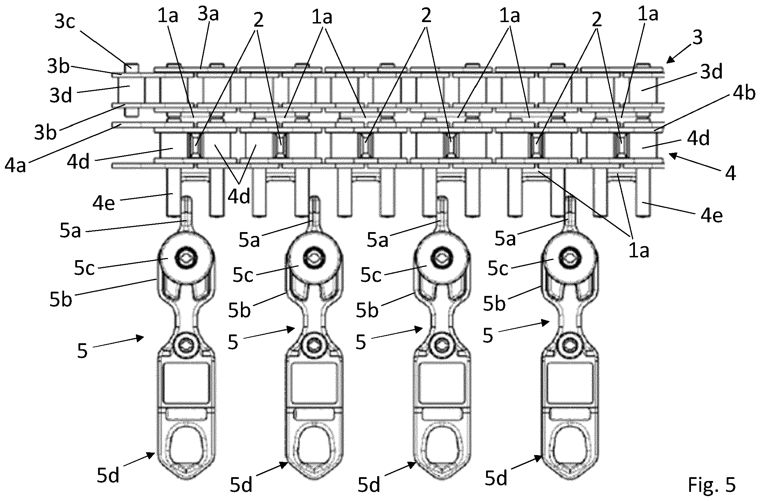

Jeder Halteadapter 5 hat ein Kopfteil 5a, ein Halsteil 5b, zwei Förderrollen 5c sowie eine nicht dargestellte (siehe hierfür Figur 5) Schnittstelle 5d für die Aufnahme eines zu befördernden Gegenstands 10. Es ist jedoch auch denkbar, dass der Halteadapter 5 anders ausgeführt ist, also andere, weniger oder zusätzliche Komponenten aufweist.

In der Ansicht der Figur 3 ist gut zu erkennen, dass die Mitnehmerzinken 1b der Adapterkonsole 1 die gleiche Teilung wie die Mitnehmerfinger 4e der Förderkette 4 aufweisen und dass die parallel bzw. auf gleicher Höhe angeordneten Mitnehmerzinken 1b und Mitnehmerfinger 4e an dem Kopfteil 5a des Halteadapters 5 anliegen bzw. angreifen.

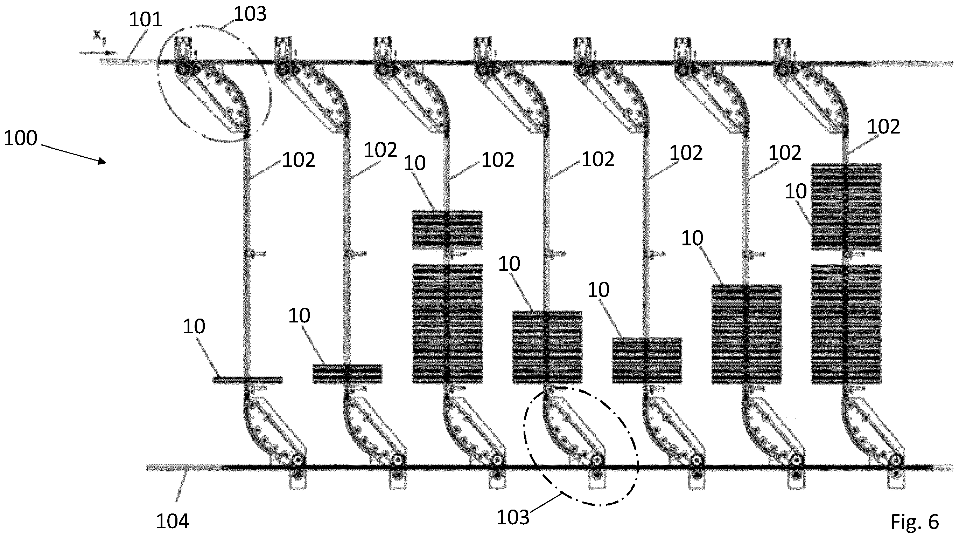

Dies ist für eine reibungslose Übergabe zwischen den Ketten 3, 4 sowie eine reibungslose Überführung von beispielsweise einem ersten Schienenprofil 101 in ein zweites Schienenprofil 102 der Fördervorrichtung 100 (siehe Figur 6) erforderlich.

In der Figur 4 ist eine schematische und ausschnittsweise Schnittansicht einer Förderkette 4 sowie darin eingreifender Ritzelzähne 2 gezeigt.

In dieser Ansicht ist gut zu erkennen, wie jeder Ritzelzahn 2 in die Förderkette 4 eingreift. Bei dem Eingriff ist der Ritzelzahn 2 zwischen zwei Rollen 4d angeordnet.

In dieser Ansicht ist ebenfalls die Form des Ritzelzahns 2 gut zu erkennen. Der Ritzelzahn 2 hat vorliegend konisch verlaufende Flanken 2b, wodurch bei der Einleitung des Eingriffs von dem Ritzelzahn 2 in die Förderkette 4 eine möglichst ruckfreie Synchronisation der Geschwindigkeiten beider Ketten 3, 4 ermöglicht wird.

Die Schnappverbindung, mit der der Ritzelzahn 2 jeweils an dem Grundkörper 1a der Adapterkonsole 1 lösbar befestigt ist, umfasst in der gezeigten Ausführungsform zwei Schnapphaken 2a. Die Schnapphaken 2a greifen um den Grundkörper 1a herum. Denkbar ist jedoch auch, dass die Schnapphaken 2a alternativ durch den Grundkörper durchgreifen. Um sicherzustellen, dass die (vertikale) Position des Ritzelzahns 2 im Betrieb beibehalten wird, sind im vorliegenden Fall weitere "Durchbrüche" des Ritzelzahns 2 durch den Grundkörper 1a vorgesehen.

In der Figur 5 ist eine schematische und ausschnittsweise Frontansicht der Ausführungsform des Systems aus Figur 1 sowie mehrerer Halteadapter 5 gezeigt.

In dieser Ansicht ist gut zu erkennen, dass die Förderkette 4 und die Transferkette 3 Kettenglieder der gleichen Größe aufweisen. Hierdurch wird die Positionierung beider Ketten 3, 4 zueinander verbessert und damit die Genauigkeit bei der Übergabe des Halteadapters 5 von der Förderkette 4 zur Transferkette 3 oder von der Transferkette 3 zur Förderkette 4 erhöht.

Die zudem gezeigten Halteadapter 5 haben zur Halterung der zu befördernden Gegenstände 10 eine Schnittstelle 5d. Die Halteadapter 5 weisen außerdem eine Förderrolle 5c im Bereich ihres Halsteils 5b sowie ein darüber angeordnetes Kopfteil 5a auf. An dem Kopfteil 5a wird zur Weiterbeförderung des Halteadapters 5 durch die Förderkette 4, aber auch durch die Transferkette 3 angegriffen.

Von den in dieser Ansicht hinter der Förderkette 4 angeordneten Adapterkonsolen 1 der Transferkette 3 und vor allem deren Grundkörper 1a sind lediglich Ausschnitte, einmal zwischen den beiden Ketten 3, 4 und einmal unter der Förderkette 4, zu sehen. Die Mitnehmerzinken 1b der Adapterkonsole 1 sind in dieser Darstellung überhaupt nicht zu sehen, da diese sich in der vorliegenden Ansicht hinter den Mitnehmerfingern 4e der Förderkette 4e befinden. Von dem Ritzelzahn 2 ist jeweils eine Spitze zwischen den Rollen 4d der Förderkette 4 erkennbar.

In der Figur 6 ist eine schematische und ausschnittsweise Draufsicht einer Ausführungsform der erfindungsgemäßen Fördervorrichtung 100 gezeigt. Der dargestellte Ausschnitt oder Abschnitt kann als Sortierabschnitt bezeichnet werden.

Die Fördervorrichtung 100 weist dort ein erstes Schienenprofil 101 auf, wobei die zu befördernden Gegenstände entlang des ersten Schienenprofils 101 befördert werden. An einer (nicht dargestellten) Aufgabestelle werden die zu befördernden Gegenstände in das erste Schienenprofil 101 aufgegeben.

Die Förderkette 4 des ersten Schienenprofils 101 ist in diesem in einer Förderrichtung x₁ kontinuierlich bewegbar. Die Förderkette 4 ist dabei insbesondere mithilfe von längs des ersten Schienenprofils 101 angeordneten Reibrollen antreibbar.

Die Halteadapter 5 sind in dem ersten Schienenprofil 101 rollbar gelagert und geführt. Das Kopfteil 5a der Halteadapter 5 ist mit der Förderkette 4 koppelbar, wie es beispielsweise in den Figuren 4 und 5 gezeigt ist.

Entlang des ersten Schienenprofils 101 sind an mehreren Positionen Weichen 103 angeordnet, mittels derer Halteadapter 5 und evtl. daran gelagerte Gegenstände 10 in ein zweites Schienenprofil 102 überführbar sind.

Es ist denkbar, dass eine Steuerung bzw. Schaltung der Weichen 103 aufgrund einer vorangegangenen Identifizierung der Halteadapter 5 oder der Gegenstände 10 durchgeführt wird. Die Identifizierung kann beispielsweise bei der Aufgabe des Halteadapters 5 und damit des daran angebrachten Gegenstands 10 in das erste Schienenprofil 101 erfolgen. Eine Steuerung bzw. Schaltung der Weiche 103 würde dann über ein Auszählen von Takten, die jeweils einer vordefinierten Wegstrecke des ersten Schienenprofils 101 entsprechen, seit der Aufgabe des Halteadapters 5 und damit des daran angebrachten Gegenstands 10 in das erste Schienenprofil 101 erfolgen.

Alternativ kann die Identifizierung mittels einer in einem Bereich des ersten Schienenprofils 101 vor der jeweiligen Weiche 103 angeordneten und auch als Leseeinheit bezeichneten Identifiziereinheit durchgeführt werden. Damit ist der Schaltzeitpunkt der Weiche 103 auch bei längeren Förderstrecken, bei denen aufgrund evtl. auftretender Längendehnungen der Förderkette 4 die Takte nicht exakt der zurückgelegten Strecke des Halteadapters 5 von der Aufgabestelle bis zur jeweiligen Weiche 103 entsprechen, noch genauer feststellbar.

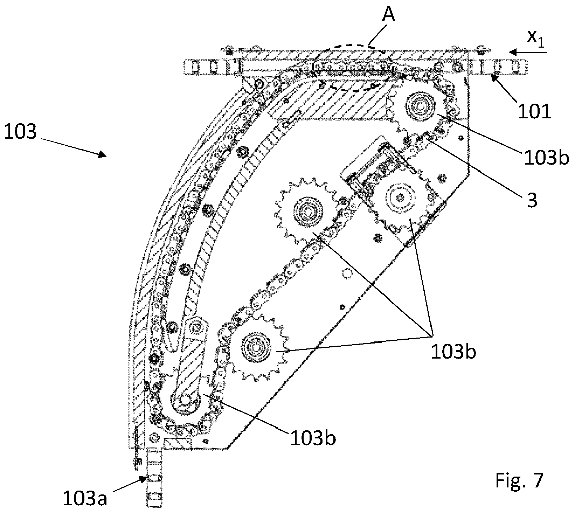

Ergibt sich also aus der Identifizierung, dass der Halteadapter 5 bzw. der zu befördernde Gegenstand 10 über die Weiche 103 aus dem ersten Schienenprofil 101 herausgefördert werden soll, wird entsprechend ein Stellelement der Weiche 103 umgestellt, so dass der Halteadapter 5 beim Weitertransport durch Umstellen der Weiche 103 in ein Schienenprofil 103a (siehe Figur 7) der Weiche 103 überführt wird und von da aus in das zweite Schienenprofil 102 überführt und entlang des zweiten Schienenprofils 102 weiter transportiert wird. Ergibt sich dies aus der Identifizierung nicht, wird entlang des ersten Schienenprofils 101 weitertransportiert.

Bei der in Figur 6 gezeigten Variante der Fördervorrichtung dienen die zweiten Schienenprofile 102 als temporäres Zwischenlager, in dem die zu befördernden Gegenstände 10 zeitweise zwischengelagert werden. Die am zweiten Schienenprofil 102 gelagerten Gegenstände 10 können im weiteren Verlauf über weitere Weichen 103 in ein drittes Schienenprofil 104 weitertransportiert werden.

Um eine reibungslose Übergabe der Halteadapter 5 bzw. der zu befördernden Gegenstände 10 von dem ersten Schienenprofil 101 über die jeweilige Weiche 103 in das zweite Schienenprofil 102 oder von dem zweiten Schienenprofil 102 über die jeweilige Weiche 103 in das dritte Schienenprofil 104 zu ermöglichen, wird die in den Figuren 1 bis 5 gezeigte und zuvor beschriebe Transferkette 3 bzw. das dort gezeigte und zuvor beschriebe System eingesetzt.

In der Figur 7 ist eine schematische Schnittansicht einer Weiche 103 der Fördervorrichtung 100 aus Figur 6 gezeigt.

Wie zur Figur 6 beschrieben, sind mittels der Weiche 103 die Halteadapter 5 und damit auch evtl. daran gelagerte Gegenstände 10 aus dem ersten Schienenprofil 101 heraus in ein zweites Schienenprofil 102 oder aus dem zweiten Schienenprofil 102 heraus in das dritte Schienenprofil 104 überführbar.

Die Weiche 103 weist ein nicht dargestelltes Stellelement sowie ein Schienenprofil 103a auf, in dem das Kopfteil 5a des jeweiligen Halteadapters 5 gelagert und geführt ist. Zur Beförderung der Halteadapter 5 und der an diesen hängenden Gegenständen weist die Weiche 103 eine Transferkette 3 auf. Die Transferkette 3 wird über Kettenräder 103b umgelenkt.

Die Transferkette 3 weist dabei, wie in den Figuren 1 bis 5 dargestellt ist, Adapterkonsolen 1 mit Mitnehmerzinken 1b zur Weiterbeförderung der Halteadapter 5 auf. Die Mitnehmerzinken 1b stehen mit den jeweiligen Kopfteilen 5a der Halteadapter 5 in Kontakt und bewegen die Halteadapter 5 entlang des ersten Schienenprofils 101 hin zu dem zweiten Schienenprofil 102 oder entlang des zweiten Schienenprofils 102 hin zu dem dritten Schienenprofil 104.

Die Weiche 103 umfasst keinen eigenen Antrieb. Hingegen wird die Transferkette 3 durch eine mittels Ritzelzähnen 2 hergestellte Kopplung mit einer Förderkette 4, welche im Kopplungsbereich A stattfindet, angetrieben.

### Bezugszeichenliste

- 1: Adapterkonsole
- 1a: Grundkörper
- 1b: Mitnehmerzinken
- 2: Ritzelzahn
- 2a: Schnapphaken
- 2b: Flanke
- 3: Transferkette
- 3a: Außenlasche (Transferkette)
- 3b: Innenlasche (Transferkette)
- 3c: Kettenbolzen (Transferkette)
- 3d: Rolle (Transferkette)
- 4: Förderkette
- 4a: Außenlasche (Förderkette)
- 4b: Innenlasche (Förderkette)
- 4c: Kettenbolzen (Förderkette)
- 4d: Rolle (Förderkette)
- 4e: Mitnehmerfinger
- 5: Halteadapter
- 5a: Kopfteil
- 5b: Halsteil
- 5c: Förderrolle
- 5d: Schnittstelle (für die Aufnahme des Gegenstands 10)
- 10: Gegenstand
- 100: Fördervorrichtung
- 101: erstes Schienenprofil
- 102: zweites Schienenprofil
- 103: Weiche
- 103a: Schienenprofil (Weiche)
- 103b: Kettenrad
- 104: drittes Schienenprofil
- x₁: Förderrichtung
- A: Kopplungsbereich

## Patentansprüche

1. Nicht angetriebenes Transferzugmittel einer Fördervorrichtung (100) zur Beförderung von hängenden Gegenständen (10), **dadurch gekennzeichnet, dass** an dem Transferzugmittel mindestens eine z-förmige Adapterkonsole (1) mit mindestens einem Mitnehmerzinken (1b) befestigt ist, wobei der Mitnehmerzinken (1b) im Wesentlichen parallel versetzt zu einem Grundkörper (1a) der Adapterkonsole (1) angeordnet ist und sich im Wesentlichen parallel zu einer Haupt-Quererstreckungsrichtung des Transferzugmittels erstreckt und aufgrund seiner Positionierung und Form geeignet ist, an einem Kopfteil (5a) eines an der Fördervorrichtung (100) gelagerten und zur Halterung von zu befördernden Gegenständen (10) dienenden Halteadapters (5) anzugreifen, um eine Weiterbeförderung des Halteadapters (5) zu ermöglichen.

2. Transferzugmittel nach Anspruch 1, **dadurch gekennzeichnet, dass** die Adapterkonsole (1) einen zweiten Mitnehmerzinken (1b) umfasst, welcher ebenfalls im Wesentlichen parallel versetzt zu dem Grundkörper (1a) der Adapterkonsole (1) angeordnet ist und sich im Wesentlichen parallel zu der Haupt-Quererstreckungsrichtung des Transferzugmittels erstreckt und die beiden Mitnehmerzinken (1b) wie die Zinken einer Gabel voneinander beabstandet angeordnet sind.

3. Transferzugmittel nach Anspruch 1 oder 2, **dadurch gekennzeichnet, dass** an dem Transferzugmittel, insbesondere an dem Grundkörper (1a) der Adapterkonsole (1), mindestens ein Eingriffselement, insbesondere ein Ritzelzahn (2) oder ein Kegel befestigt ist, mittels dessen das Transferzugmittel mit einer Kette, insbesondere einer Förderkette (4) der Fördervorrichtung (100), koppelbar ist.

4. Transferzugmittel nach Anspruch 3, **dadurch gekennzeichnet, dass** das Eingriffselement auf der gleichen Seite der z-förmigen Adapterkonsole (1) angeordnet ist, zu welcher auch der mindestens eine Mitnehmerzinken (1b) versetzt angeordnet ist.

5. Transferzugmittel nach Anspruch 3 oder 4, **dadurch gekennzeichnet, dass** das Eingriffselement als Spritzgussteil ausgebildet ist und/oder an dem Transferzugmittel, insbesondere an dem Grundkörper (1a) der Adapterkonsole (1), mittels einer lösbaren Verbindung befestigt ist.

6. Transferzugmittel nach einem der vorhergehenden Ansprüche, **dadurch gekennzeichnet, dass** die Adapterkonsole (1) als Stanz-/Biegeteil ausgebildet ist.

7. Transferzugmittel nach einem der vorhergehenden Ansprüche, **dadurch gekennzeichnet, dass** dieses eine Transferkette (3), ein Transferriemen oder ein Transferseil ist.

8. System mit einer angetriebenen Förderkette (4), die in eine Förderrichtung (x₁) kontinuierlich bewegbar ist, und einem Transferzugmittel nach einem der Ansprüche 3 bis 7, **dadurch gekennzeichnet, dass** die Förderkette (4) und das Transferzugmittel derart zueinander, insbesondere übereinander, angeordnet sind, dass das mindestens eine Eingriffselement des Transferzugmittels in die Förderkette (4), insbesondere zwischen zwei Kettenbolzen (4c) oder Rollen (4d) der Förderkette (4), eingreift, um eine Kraftübertragung von der Förderkette (4) auf das Transferzugmittel, also einen Übertrieb, herzustellen und dadurch das Transferzugmittel anzutreiben.

9. System nach Anspruch 8, **dadurch gekennzeichnet, dass** das Transferzugmittel als Transferkette (3) ausgebildet ist und die Förderkette (4) und die Transferkette (3) Kettenglieder der gleichen Größe aufweisen und das Eingriffselement der Transferkette (3) eine derartige Form aufweist, dass bei der Einleitung des Eingriffs eine möglichst ruckfreie Synchronisation der Geschwindigkeiten beider Ketten (3, 4) erfolgt.

10. Fördervorrichtung (100) zur Beförderung von hängenden Gegenständen (10), wobei die Fördervorrichtung (100) Halteadapter (5) zur Halterung von zu befördernden Gegenständen (10) sowie ein System nach Anspruch 8 oder 9 aufweist und das Transferzugmittel insbesondere an einer Weiche (103) der Fördervorrichtung (100) angeordnet ist, **dadurch gekennzeichnet, dass** an der Förderkette (4) Mitnehmerfinger (4e), insbesondere in Form von verlängerten Kettenbolzen (4c), angeordnet sind, mittels derer die an der Fördervorrichtung (100) gelagerten Halteadapter (5) förderbar sind, und die Mitnehmerzinken (1b) der Adapterkonsole (1) die gleiche Teilung wie die Mitnehmerfinger (4e) der Förderkette (4) aufweisen, damit bei einer Übernahme eines Halteadapters (5) von der Förderkette (4) zum Transferzugmittel oder umgekehrt die Mitnehmerzinken (1b) der Adapterkonsole (1) parallel zu den Mitnehmerfingern (4e) der Förderkette (4) angeordnet sind.
